# EUROPÄISCHE PATENTSCHRIFT

(11) **EP 1 266 869 B1**
(45) Veröffentlichungstag und Bekanntmachung des Hinweises auf die Patenterteilung: **16.11.2005**
(21) Anmeldenummer: 01114243.7
(22) Anmeldetag: 12.06.2001
(51) Int. Cl.: C03B 7/00, C03B 7/14

(54) **Verfahren und Vorrichtung für die gleichzeitige Herstellung von Glasprodukten mit unterschiedlicher Masse**
Process and apparatus for simultaneous production of glass products of differing weight
Procédé et dispositif pour la fabrication de produits en verre de masse différente

(43) Veröffentlichungstag der Anmeldung: 18.12.2002
(73) Patentinhaber: Heinz Glas GmbH, 96355 Kleintettau (DE)
(72) Erfinder: Müller, Franz, 96317 Kronach (DE); Krischke, Alfred, 96355 Tettau (DE); Jungkunz, Wilfried, 96358 Teuschnitz (DE)
(74) Vertreter: Wahl, Hendrik

(56) Entgegenhaltungen:
- EP-A- 0 668 248
- PATENT ABSTRACTS OF JAPAN vol. 15, no. 27, 22. Januar 1991 (1991-01-22) & JP 02 267125 A (HOYA CORP), 31. Oktober 1990 (1990-10-31)
- PATENT ABSTRACTS OF JAPAN vol. 13, no. 562, 13. Dezember 1989 (1989-12-13) & JP 01 234335 A (ISHIZUKA GLASS CO LTD), 19. September 1989 (1989-09-19)
- PATENT ABSTRACTS OF JAPAN vol. 18, no. 482, 8. September 1994 (1994-09-08) & JP 06 157051 A (OHARA INC), 3. Juni 1994 (1994-06-03)

## Beschreibung

Die vorliegende Erfindung betrifft ein Herstellungsverfahren und eine Herstellungsvorrichtung für die gleichzeitige Herstellung unterschiedlicher Glas-, insbesondere Hohlglasprodukte mit unterschiedlicher Masse, d.h. Postengröße.

Bislang sind Herstellungsmaschinen für Glasprodukte, insbesondere für die Herstellung von Hohlglasprodukten wie Flaschen und Flakons bekannt, in denen eine Reihe von Formgebungseinheiten für ein Hohlglasprodukt oder unterschiedliche Hohlglasprodukte angeordnet sind. Die Formgebungseinheiten erhalten die auf Bearbeitungstemperatur von etwa 1100 bis 1250°C befindlichen Glasmasseteile, kurz Glasposten, von einer Speiseanordnung, die wenigstens ein Glasreservoir, einen oder mehrere Plunger, die eine Öffnung in dem Glasreservoir zur Abgabe eines Glaspostens freigeben und eine jedem Plunger zugeordnete Schneidevorrichtung umfasst, um den Glasposten definiert zur Erzielung einer bestimmten Postengröße abzuschneiden. Dieser von der Speiseanordnung abgegebene Glasposten wird nun über eine Rutschrinne einer Zufuhreinrichtung sukzessive mehreren Formgebungseinheiten zugeführt, die hintereinander bedient werden. Die Formgebungseinheiten können für die Fertigung unterschiedlicher Hohlglasprodukte ausgebildet sein. Voraussetzung ist jedoch, dass die Postengröße der unterschiedlichen Hohlglasprodukte identisch ist, so dass sich für jede Formgebungseinheit die gleiche Taktzeit, d.h. Periode zwischen den Speisezeitpunkten ergibt.

Die EP 668 248 A2 zeigt eine Herstellungsmaschine für Glasprodukte unterschiedlicher Masse. Durch eine Speisevorrichtung werden unterschiedliche große Glasposten erzeugt, welche dann Formgebungseinheiten zugeführt werden, die für die Herstellung von Glasprodukten mit unterschiedlicher Masse konzipiert sind. Der Nachteil dieser Vorrichtung besteht darin, dass die Taktzeiten für alle Vorrichtungen identisch sind, so dass die Taktzeiten nicht auf die thermischen Erfordernisse der unterschiedlichen Formgebungsstationen abgestimmt werden können.

Auch die JP 01 234335 A zeigt eine Speisevorrichtung zur Erzeugung unterschiedlich großer Glasposten zur Verwendung in einer Herstellungsvorrichtung für Glasprodukte.

Der Erfindung liegt nun die Aufgabe zugrunde, ein gattungsVerfahren und eine Vorrichtung zur Herstellung unterschiedlicher Glasprodukte derart weiterzubilden, dass gleichzeitig Glasprodukte mit unterschiedlicher Masse hergestellt werden können, d.h. die eine unterschiedliche Postengröße benötigen.

Die Aufgabe wird durch eine Vorrichtung gemäß Anspruch 1 und ein Verfahren gemäß Anspruch 5 gelöst. Vorteilhafte Weiterbildungen der Erfindung sind Gegenstand der zugehörigen Unteransprüche.

Erfindungsgemäß wird der Plunger und die zugehörige Schneideinrichtung für jeden Glastposten individuell in seiner zeitlichen Betätigung als auch in seinem Betätigungsweg gesteuert, so dass Glasposten unterschiedlicher Größe erzeugt werden können. Statt einem können auch mehrere Plunger, d.h. Abgabeeinrichtungen in der Speiseanordnung vorgesehen sein, in welchem Fall die Abgabe von Zweifachposten oder Dreifachposten für entsprechend ausgebildete Formgebungseinheiten möglich ist. Dies bedeutet, dass bei einer Speisung gleichzeitig zwei bzw. drei Produkte mit identischer Postengröße gleichzeitig in einer Formgebungseinheit hergestellt werden können. Die Abgabeeinrichtung(en) der Speiseanordnung, insbesondere Plunger und die zugehörige Schneideinrichtung sind von einer Steuerung in Koordination bzw. Synchronisation mit der Zufuhreinrichtung zu den Formgebungseinheiten und der Betätigung der Formgebungseinheiten steuerbar. Die abgegebenen Glasposten werden von der Zufuhreinrichtung aufgegangen und sukzessive den einzelnen Formgebungseinheiten zugeführt. Da nun unterschiedlich große Glasposten in den unterschiedlichen Formgebungseinheiten verarbeitet werden, ist die Zykluszeit, d.h. die Verarbeitungsperiode und somit die Speisezyklen der einzelnen Formgebungseinheiten nicht mehr identisch, was erfordert, dass die Zufuhreinrichtung durch die Steuerung derart gesteuert wird, dass nicht ein gewisser Zufuhrablauf eingehalten wird, sondern dass jede Formgebungseinheit an ihrem dem individuellen Speisezyklus entsprechenden Speisezeitpunkt versorgt wird.

Die Steuerung enthält vorzugsweise einen Rechner, der im Vorhinein die aufgrund der Postengröße erforderliche Zykluszeit der Formgebungseinheit errechnet. Wird nun eine Formgebungseinheit mit einer bestimmten Glaspostengröße in Betrieb genommen, so berechnet die Steuerung vorzugsweise im Vorhinein den optimalen Startzeitpunkt für den Verarbeitungszyklus derart, dass möglichst wenig Überschneidungen mit den Speisezeitpunkten der anderen Formgebungseinheiten auftreten. Zum errechneten Startzeitpunkt wird dann die erste Speisung der Formgebungseinheit vorgenommen. Des weiteren wird, wenn die Steuerung das zeitliche Aufeinanderfallen der Speisezeitpunkte mehrerer Formgebungseinheiten ermittelt oder der zeitliche Unterschied in den Speisezeitpunkten von zwei oder mehr Formgebungseinheiten zur Durchführung des Speisevorgangs nicht ausreicht, die Speisung einer oder mehrerer der gleichzeitig zu speisenden Formgebungseinheiten auf das nächste freie Zeitfenster verschoben, das eine Speisung der nicht gespeisten Formgebungseinheit(en) erlaubt. Vorzugsweise wird das in der verzögert gespeisten Formgebungseinheit hergestellte Produkt von den anderen Produkten separiert oder gleich in einen Ausschussbehälter entsorgt. Auf diese Weise wird erreicht, dass nur solche Produkte weiter verarbeitet oder in die Verpackungseinrichtung überführt werden, die im vorbestimmten Produktionszyklus hergestellt wurden. Aus einer verzögerten Speisung einer Formgebungseinheit resultieren leichte Temperaturunterschiede der Herstellungsform gegenüber den Temperaturverhältnissen bei normaler Speisung im Zyklus, die zu leicht veränderten Abmessungen oder Eigenschaften der verzögert hergestellten Produkte führen können. Aus diesem Grunde kann durch die Separierung der Produkte, die in einer verzögert eingespeisten Formgebungseinheit hergestellt wurden, der Gesamtausschuss der an die Verpackungseinrichtung oder Weiterverarbeitungseinrichtung gelieferten Hohlglasprodukte deutlich verringert werden.

Der Vorteil der Erfindung besteht darin, dass in einer Maschine die Herstellung unterschiedlicher Produkte mit unterschiedlicher Herstellungs- bzw. Formgebungszeit in den Formgebungseinheiten möglich ist, was bisher für nicht möglich gehalten wurde. Ermöglicht wird dies durch eine individuelle gesteuerte Herstellung unterschiedlich großer Glasposten als auch durch die gezielte Ansteuerung der Zufuhreinrichtung zu den Formgebungseinheiten, die als nächstes gespeist werden müssen gesteuert durch wenigstens eine Steuerung, die das Problem von gleichzeitig auftretenden Speisungen in erfindungsgemäßer Weise löst, d.h. durch Verzögerung einer oder mehrerer der gleichzeitig zu speisenden Formgebungseinheiten. Für die Frage, welche der Formgebungseinheiten verzögert gespeist werden soll, wird vorzugsweise das nächste Zeitfenster bestimmt, in dem eine Speisung möglich ist. Dann wird für die betroffenen gleichzeitig zu speisenden Formgebungseinheiten beginnend von dem gewählten nächst möglichen freien Zeitfenster unter Berücksichtigung der individuellen Zykluszeit der Formgebungseinheiten untersucht, bei welcher der Formgebungseinheiten die geringste Überschneidungshäufigkeit (Überschneidungen pro Zeiteinheit) mit der Speisung anderer Formgebungseinheiten auftritt. Schließlich wird diejenige Formgebungseinheit auf das nachfolgende Zeitfenster verzögert, die die geringste Überschneidungshäufigkeit hat. Auf diese Weise wird vermieden, dass die Speisung einer Formgebungseinheit verzögert wird, die bislang sehr wenig Überschneidungen mit der Speisung anderer Formgebungseinheiten hatte und nun nach Verzögerung in das neue Zeitfenster unter Berücksichtigung ihrer individuellen Zykluszeit relativ häufige Überschneidungen aufweist. Somit stellt das Verzögern derjenigen Formgebungseinheit(en), die mit dem neuen Startzeitpunkt gemäß dem Zeitfenster unter Berücksichtigung ihrer Zykluszeit möglichst wenig Überschneidungen aufweist, ein ökonomisch sehr vorteilhaftes Verfahren dar.

Die erfindungsgemäße Vorrichtung kann eine Vorrichtung zur gleichzeitigen Verarbeitung von zwei oder drei Glasposten in den Formgebungseinheiten sein, in welchem Fall die Abgabeeinrichtungen in der Speiseanordnung in entsprechender Anzahl vorhanden sein müssen. Diese Abgabeeinrichtungen können entweder individuell oder synchron gesteuert sein, sofern aufgrund ihrer Anordnung sichergestellt ist, dass bei synchroner Betätigung die Größe des Glaspostens bei allen Abgabeeinrichtungen identisch ist.

Die Steuerung der einzelnen Komponenten kann dezentral oder zentral vorgesehen sein. Die maximale Anzahl der Formgebungseinheiten richtet sich nach der Kapazität der Speiseanordnung und Zufuhrvorrichtung, kann also beispielsweise auch bis zu 20 oder mehr betragen. Statt Hohlglasprodukten können auch andere Glasprodukte, z.B. Pressglasprodukte, verarbeitet werden.

Die Erfindung wird nachfolgend beispielsweise anhand der schematischen Zeichnung beschrieben. Diese zeigt eine Herstellungsvorrichtung zur gleichzeitigen Verarbeitung von zwei Posten je Formgebungseinheit.

Die Herstellungsmaschine 10 umfasst eine Speiseanordnung 12, bestehend aus einem Glasreservoir 14, in dem sich eine auf etwa 1100 bis 1250° C aufgeheizte Glasschmelze 16 befindet. In dem Glasreservoir 14 sind zwei Plunger 18a, 18b angeordnet, deren Betätigungsmechanismus (nicht dargestellt) über eine Steuerleitung 20 mit einer zentralen Steuerung 22 verbunden ist. Die Plunger 18a, 18b verschließen in der dargestellten Schließposition Öffnungen im Boden des Reservoirs 14. Die Abgabe eines Glaspostens aus der Wanne erfolgt durch Anheben der Plunger 18a, 18b, um einen definierten Weg für eine festgelegte Zeit. Der Öffnungsweg als auch die Öffnungszeit des Plungers werden über die Steuerleitung 20 durch die Steuerung 22 gesteuert. Hierbei fließt eine definierte Glasmenge, nachfolgend "Glasposten", durch die Bodenöffnung nach außen. Nach Zurückfahren der Plunger in ihre Schließstellung wird der Glasposten durch unterhalb der Öffnungen angeordnete Schneideinrichtungen 24a, 24b abgeschnitten und fällt in Zufuhrrinnen 26 einer Zufuhreinrichtung 28, die über eine Steuerleitung 31 mit der zentralen Steuerung 22 verbunden ist. Die Zufuhreinrichtung 28 verfügt über eine bewegliche Speiserinne 30, durch die die gleichzeitige Zufuhr der zwei Posten zu einzelnen Formgebungseinheiten 32a - c möglich ist. Die ersten drei Formgebungseinheiten 32a sind zur Verarbeitung einer ersten Postengröße ausgebildet, während die letzten beiden Formgebungseinheiten 32b und 32c zur Verarbeitung von Hohlglasprodukten konzipiert sind, die zueinander und zu den Formgebungseinheiten 32a unterschiedliche Postengrößen erfordern.

Unterhalb der Formgebungseinheiten 32 ist ein Transportband 34 angeordnet, in deren Verlauf eine Separationseinrichtung 36 angeordnet ist, die durch einen Motor 38 betätigt wird. Der Motor 38 der Separationsanordnung 36, das Förderband 34 als auch die Formgebungseinheiten 32 sind über eine Steuerleitung 40 mit der zentralen Steuerung 22 verbunden.

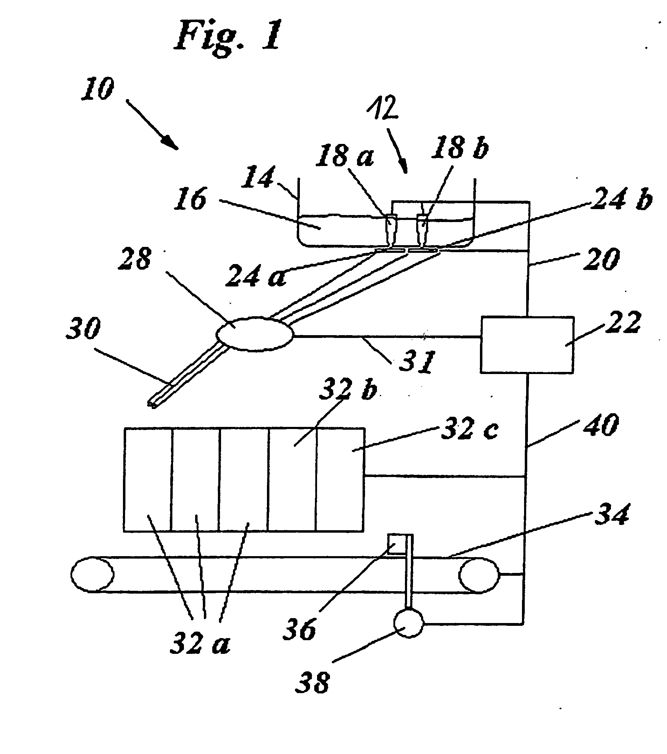

Die Funktion der in Figur 1 dargestellten Herstellungsvorrichtung wird wie folgt beschrieben.

Die in den Formgebungseinheiten 32a, 32b und 32c herzustellenden Hohlglasprodukte erfordern aufgrund der unterschiedlichen Postengröße unterschiedlich lange Zykluszeiten. Die zentrale Steuerung 22 berechnet die Startzeitpunkte für die Speisung der Formgebungseinheiten 32 a - c derart, dass basierend auf den Startzeitpunkten der Speisung der Formgebungseinheiten 32 a - c und deren Zykluszeit möglichst wenig Überschneidungen in der Speisung auftreten.

Nach Festlegung des Startzeitpunktes der einzelnen Formgebungseinheiten 32 a - c werden dann in der Speiseanordnung 12 gleichzeitig zwei Glasposten geeigneter Größe hergestellt und über die Zufuhreinrichtung 28 der gerade zu speisenden Formgebungseinheit 32a - c zugeführt. Nach dem Speisevorgang werden in den unterschiedlichen Formgebungseinheiten aus den zwei Glasposten zwei Hohlglasprodukte geblasen und über eine nicht dargestellte Überführungseinrichtung auf dem Transportband 34 abgestellt.

Kommt es nun aufgrund der unterschiedlichen Zykluszeiten im Verlauf der Produktion zu einer Überschneidung der Speisezeit zweier Formgebungseinheiten, z.B. 32b und 32c, so errechnet die Steuerung im Vorhinein, d.h. vor der Speisung, welches nachfolgende Zeitfenster für eine verzögerte Speisung einer der gleichzeitig zu speisenden Formgebungseinheiten zur Verfügung steht und berechnet für jede der gleichzeitig zu speisenden Formgebungseinheiten die Überschneidungshäufigkeit des Speisezeitpunktes mit dem verzögerten Zeitfenster als Startzeitpunkt. Es wird dann diejenige Formgebungseinheit verzögert gespeist, die mit dem neuen verzögerten Zeitfenster die geringsten Überschneidungshäufigkeit in den Speisezeitpunkten mit den anderen Formgebungseinheiten aufweist. Es ist auch möglich, dass die Steuerung diesen Vergleich mit unterschiedlichen, z.B. späteren Zeitfenstern durchführt, falls mit dem ersten nachfolgenden freien Zeitfenster kein zufriedenstellendes Ergebnis erzielt wird.

Die Produkte, die von den verzögert gespeisten Formgebungseinheiten hergestellten wurden, können durch die motorisch betriebene Separationseinrichtung 36 vom Band entfernt und separiert werden, gegebenenfalls in einen Ausschussbehälter, da die verzögert gespeiste Formgebungseinheit möglicherweise durch die verzögerte Speisung etwas aus ihrem Temperaturgleichgewicht geraten ist und deshalb das Produkt mit höherer Wahrscheinlichkeit die geforderten Produktionstoleranzen nicht erfüllt.

Wenn der Zeitpunkt für eine Speisung zweier nacheinander zu speisender Formgebungseinheiten aufgrund des ungenügenden zeiltichen Abstandes nicht ausreicht, kann der Glasposten, der für die verzögerte Formgebungseinheit vorgesehen ist, vor der Speisung in die Formgebungseinheit in den Ausschuß überführt werden.

## Patentansprüche

1. Herstellungsvorrichtung für die gleichzeitige Herstellung unterschiedlicher Glas-, insbesondere Hohlglasprodukte mit unterschiedlicher Masse, umfassend
- wenigstens eine Speiseanordnung (12), die wenigstens ein Glasreservoir (14), wenigstens einen Plunger (18 a,b) vor und wenigstens eine zugehörigen Schneidvorrichtung (24 a,b) nach dem Auslaß des Reservoirs aufweist,
- wenigstens eine Zufuhreinrichtung (28) zum sukzessiven Überführen der von der Speiseanordnung (12) abgegebenen Glasposten mit unterschiedlichen Massen in mehreren nebeneinander angeordnete Formgebungseinheiten (32 a - c) welche für unterschiedliche Glasprodukte mit unterchiedlichen Massen ausgelegt sind,
- wenigstens eine Steuerung (22) für die Steuerung des Plungers (18 a,b) und der Schneidvorrichtung (24 a,b) der Speiseanordnung (12), der Zufuhreinrichtung (28) und der Formgebungseinheiten (32 a - c), welche Steuerung (22) die Tätigkeit der Formgebungseinheiten (32 a - c), der Speiseanordnung (12) und der Zufuhreinrichtung (28) in Übereinstimmung mit der postengrößenspezifischen Verarbeitungszeit der Produkte in den Formgebungseinheiten (32 a - c) bzw. deren Taktzyklus koordiniert,
- wobei die Steuerung (22) derart ausgebildet ist, dass sie, wenn sie das zeitliche Aufeinanderfallen der Speisezeitpunkte wenigstens zweier Formgebungseinheiten (32 a - c) oder einen zeitlichen Abstand der Speisezeitpunkte von zwei oder mehreren Formgebungseinheiten (32 a - c) ermittelt, der die für einen Speisevorgang notwendige Zeit unterschreitet, die Speisung jedenfalls einer der zu speisenden Formgebungseinheiten (32 a - c) auf ein nachgeordnetes freies Zeitfenster verzögert, das groß genug ist, die Speisung der noch nicht gespeisten Formgebungseinheit(en) durchzuführen.

2. Herstellungsvorrichtung nach Anspruch 1, bei der eine Separationseinrichtung (36) zur Separation von ausgewählten Produkten aus den in den Formgebungseinheiten (32 a - c) erzeugten Produkten vorgesehen ist, welche Separationseinrichtung (36) mit der Steuerung (22) verbunden und von dieser zur Separation derjenigen Produkte betätigbar ist , die in den verzögert gespeisten Formgebungseinheiten (32 a - c) erzeugt wurden.

3. Herstellungsvorrichtung nach Anspruch 1 oder 2,
bei der die Speiseanordnung mindestens zwei unabhängig voneinander steuerbare Plunger (18 a,b) aufweist, und die Zufuhreinrichtung (28) zur gleichzeitigen Überführung wenigstens zweier Glasposten in wenigstens eine Formgebungseinheit ausgebildet ist.

4. Herstellungsvorrichtung nach Anspruch 1, 2 oder 3,
bei der die Steuerung (22) den ersten Speisezeitpunkt für den Betriebsbeginn einer Formgebungseinheit in Abhängigkeit von den Speisezeitpunkten der übrigen Formgebungseinheiten (32 a - c) auswählt, wobei der Speisezeitpunkt derart gewählt wird, dass möglichst wenig Überschneidungen mit den Speisezeitpunkten der anderen Formgebungseinheiten (32 a - c) auftreten.

5. Herstellungsverfahren für die gleichzeitige Herstellung unterschiedlicher Glas-, insbesondere Hohlglasprodukte mit unterschiedlicher Postengröße in einer Herstellungsvorrichtung umfassend
- wenigstens eine Speiseanordnung (12), die wenigstens ein Glasreservoir (14), die wenigstens einen Plunger (18 a,b) vor und wenigstens eine zugehörigen Schneidvorrichtung (24 a,b) nach dem Wannenauslaß aufweist,
- wenigstens eine Zufuhreinrichtung (28) zum sukzessiven Überführen der von der Speiseanordnung (12) abgegebenen Glasposten mit unterschiedlichen Massen in mehreren nebeneinander angeordnete Formgebungseinheiten (32 a - c), welche für unterschiedliche große Glasprodukte mit unterschiedlichen Massen ausgelget sind,
- wenigstens eine Steuerung (22) für die Steuerung des Plungers (18 a,b) und der Schneidvorrichtung (24 a,b) der Speiseanordnung (12), der Zufuhreinrichtung (28) und der Formgebungseinheiten (32 a - c), welche Steuerung (22) die Tätigkeit der Formgebungseinheiten (32 a - c), der Speiseanordnung (12) und der Zufuhreinrichtung (28) in Übereinstimmung mit der postengrößenspezifischen Verarbeitungszeit der Produkte in den Formgebungseinheiten (32 a - c) bzw. deren Taktzyklus koordiniert, wobei im Falle eines zeitlichen Aufeinanderfallens der Speisezeitpunkte wenigstens zweier Formgebungseinheiten (32 a - c) oder im Fall eines zeitlichen Abstands der Speisezeitpunkte zweier Formgebungseinheiten (32 a - c), der die für einen Speisevorgang notwendige Zeit unterschreitet, die Speisung jedenfalls einer der zu speisenden Formgebungseinheiten (32 a - c) auf ein nachgeordnetes freies Zeitfenster verzögert wird, das groß genug ist, die Speisung der nicht gespeisten Formgebungseinheit durchzuführen.

6. Herstellungsverfahren nach Anspruch 5,
bei dem das Produkt einer verzögert gespeisten Formgebungseinheit separiert und/oder entsorgt wird.

7. Herstellungsverfahren nach Anspruch 5 oder 6,
bei dem der erste Speisezeitpunkt für den Betriebsbeginn einer Formgebungseinheit in Abhängigkeit von den Speisezeitpunkten der übrigen Formgebungseinheiten (32 a - c) ausgewählt wird, wobei der Speisezeitpunkt derart gewählt wird, dass die Überschneidungshäufigkeit mit den Speisezeitpunkten der anderen Formgebungseinheiten (32 a - c) gering bzw. minimiert ist.

8. Herstellungsverfahren nach Anspruch 5, 6 oder 7,
bei dem der Speisezeitpunkt derjenigen Formgebungseinheit verzögert wird, die auf der Basis des nachgeordneten Zeitfensters als Startzeitpunkt für den individuellen Speisezyklus die geringste Überschneidungshäufigkeit mit den Speisezeitpunkten anderer Formgebungseinheiten (32 a - c) aufweist.

9. Herstellungsverfahren nach Anspruch 8,
bei dem als nachgeordnetes Zeitfenster die dem Sollspeisezeitpunkt unmittelbar nachfolgende freie Zeitspanne ausgewählt und verwendet wird, und bei dem ein diesem gewählten Zeitfenster folgendes weiteres Zeitfenster verwendet wird, wenn für das erstere Zeitfenster keine Lösung mit einer zufriedenstellend geringen Überschneidungshäufigkeit gefunden wurde.

10. Herstellungsverfahren nach einem der Ansprüche 7, 8 oder 9, dass für die Beurteilung der Überschneidungshäufigkeit die Speisezeitpunkte aller Formgebungseinheiten (32 a - c) in einer bestimmten Zeit, z.B. zwischen 5 min. und 2 h untersucht werden.

11. Herstellungsverfahren nach einem der Ansprüche 5 bis 10, bei dem mehrere Glasposten gleichzeitig hergestellt und in eine Formgebungseinheit überführt werden.

## Claims

1. An apparatus for simultaneous production of dissimilar glass products, particularly hollow glass products differing in weight, comprising
- at least one feeder (12) comprising at least one glass tank (14), at least one plunger (18 a, b) upstream of said tank outlet and at least one associated shear (24 a, b) downstream of said tank outlet,
- at least one distributor (28) for successive transfer of said gobs differing in weight dispensed by said feeder (12) into multiple, juxtaposed forming sections (32 a - c) designed for dissimilar glass products differing in weight,
- at least one controller (22) for controlling said plunger (18 a, b) and said shear (24 a, b) of said feeder (12), distributor (28) and forming sections (32 a - c), said controller (22) coordinating the activity of said forming sections (32 a - c), feeder (12) and distributor (28) in agreement with the processing time specific to the gob weight of said products in said forming sections (32 a - c) or their cycle time,
- said controller (22) being configured such that, when detecting coincidence in time of said points in time of feeding at least two forming sections (32 a - c) or a time spacing of said points in time of feeding two or more forming sections (32 a - c) which is less than the minimum time needed for a feed action, it delays said feed in any case of one of said forming sections (32 a - c) to be fed to a subsequent free time window which is large enough to implement the feed of said forming section(s) still to receive a feed.

2. The production apparatus as set forth in claim 1 wherein a separator (36) for separating products from the products produced in said forming sections (32 a - c) is provided, said separator (36) being connected to said controller (22) for actuating separation of products produced in said forming sections (32 a - c) with delayed feed.

3. The production apparatus as set forth in claim 1 or 2 wherein said feeder comprises at least two plungers (18 a,b) each controllable independently of the other and said distributor (28) is configured for simultaneous transfer of at least two gobs into at least one forming section.

4. The production apparatus as set forth in claim 1, 2 or 3 wherein said controller (22) selects said first feed time point for start of operation of a forming section as a function of feed time points of the remaining forming sections (32 a - c), said feed time point being selected such that any overlaps with said feed time points of the other forming sections (32 a - c) are minimized.

5. A process for simultaneous production of dissimilar glass products, particularly hollow glass products differing in weight, in a production apparatus comprising
- at least one feeder (12) comprising at least one glass tank (14), at least one plunger (18 a, b) upstream of said tank outlet and at least one associated shear (24 a, b) downstream of said tank outlet,
- at least one distributor (28) for successive transfer of said gobs differing in weight dispensed by said feeder (12) into multiple, juxtaposed forming sections (32 a - c) designed for dissimilar glass products differing in weight,
- at least one controller (22) for controlling said plunger (18 a, b) and said shear (24 a, b) of said feeder (12), distributor (28) and forming sections (32 a - c), said controller (22) coordinating the activity of said forming sections (32 a - c), feeder (12) and distributor (28) in agreement with the processing time specific to the gob weight of said products in said forming sections (32 a - c) or their cycle time, and when detecting coincidence in time of said points in time of feeding at least two forming sections (32 a - c) or a time spacing of said points in time of feeding two or more forming sections (32 a - c) which is less than the minimum time needed for a feed action, said controller (22) delays said feed in any case of one of said forming sections (32 a - c) to be fed to a subsequent free time window which is large enough to implement the feed of the forming section still to receive a feed.

6. The production process as set forth in claim 5 wherein said product of a forming section fed delayed is separated and/or scrapped.

7. The production process as set forth in claim 5 or 6 wherein the first feed time point for start of operation of a forming section is selected as a function of feed time points of the remaining forming sections (32 a - c), said feed time point being selected such that the frequency of said overlaps with said feed time points of the other forming sections (32 a - c) is minimized.

8. The production process as set forth in claim 5, 6 or 7 wherein the feed time point of said forming section is delayed which on the basis of said subsequent time window as the point in time for starting the individual feed cycle has minimum overlap frequency with feed time points of other forming sections (32 a - c).

9. The production process as set forth in claim 8 wherein selected and used as said subsequent time window is the free time span directly subsequent to the wanted feed time point and wherein a forming section time window following said selected time window is used when no solution having a satisfactory minimum overlap frequency has been found for said first time window.

10. The production process as set forth in any of the claims 7, 8 or 9 wherein for judging said overlap frequency the point in time for feeding all forming sections (32 a - c) in a specific time range e.g. 5 minutes to 2 hours is analyzed.

11. The production process as set forth in any of the claims 5 to 10 wherein multiple gobs are produced simultaneously and transferred into a forming section.

## Revendications

1. Dispositif de fabrication pour la fabrication simultanée de différents produits en verre, notamment en verre creux, avec une masse différente, comportant :
- au moins un dispositif d'alimentation (12), qui comporte au moins un réservoir de verre (14), au moins un plongeur (18a, b) avant la sortie du réservoir et au moins un dispositif de coupe (24 a, b) après la sortie du réservoir,
- au moins un dispositif de transfert (28) pour le transfert successif des masses de verre délivrées du dispositif d'alimentation (12) avec des masses différentes dans plusieures unités de mise en forme (32 a à 32c), lesquelles unités sont conçues pour différents produits en verre avec différentes masses ,
- au moins un dispositif de commande (22) pour la commande du plongeurs (18 a ,b) et du dispositif de coupe (24 a, b) du dispositif d'alimentation (12), du dispositif de transfert (28) et des unités de mise en forme (32 a à 32c), laquelle unité de commande (22) coordonne l'activité des unités de mise en forme (32a à 32c), le dispositif d'alimentation (12) et le dispositif de transfert (28) en concordance avec les temps de traitement spécifiques aux masses de verre des produits dans les unités de mise en forme (32 a à 32 c), respectivement leurs cadences,
- le dispositif de commande (22) étant réalisé de manière à décaler de toute manière une des unités de mise en forme (32 a à 32c) vers une fenêtre temporelle qui est assez grande pour effectuer l'alimentation de l'unité, respectivement, des unités de mise en forme qui n'ont pas encore été alimentées, dans le cas où ledit dispositif de commande détermine la superposition temporelle des instants d'alimentation d'au moins deux unités de mise en forme (32 a à 32c) ou une distance temporelle des instants d'alimentation au moins de deux ou plusieurs unités de mise en forme (32 a à 32c) ; laquelle distance est inférieure au temps nécessaire pour le processus d'alimentation.

2. Dispositif de fabrication selon la revendication 1, dans lequel un dispositif de séparation (36) est prévu pour la séparation de produits choisis parmi les produits fabriqués dans les unités de mise en forme (32a à 32c), lequel dispositif de séparation (36) est relié au dispositif de commande (22) et lequel dispositif de séparation peut être actionné par le dispositif de commande pour la séparation des produits qui ont été fabriqués dans les unités de mise en forme (32 a à 32c) alimentées de façon décalée.

3. Dispositif de fabrication selon la revendication 1, et 2, dans lequel le dispositif d'alimentation comporte au moins deux plongeurs (18a, b) susceptibles d'être commandés indépendamment l'un de l'autre, et dans lequel le dispositif de transfert (28) est réalisé pour le transfert simultané d'au moins deux masse de verre dans au moins une unité de mise en forme

4. Dispositif de fabrication selon la revendication 1, 2 et 3, dans lequel le dispositif de commande (22) choisit le premier instant d'alimentation pour le début de service d'une unité de mise en forme en fonction des instants d'alimentation des autres unités de mise en forme (32a à 32c) ; l'instant d'alimentation étant choisi pour voir apparaître le moins de superpositions possible avec les instants d'alimentation des autres unités de mise en forme (32a à 32c).

5. Procédé de fabrication pour la fabrication simultanée de différents produits en verre, notamment en verre creux, avec une masse différente, comportant :
- au moins un dispositif d'alimentation (12), avec au moins un réservoir de verre (14), au moins un plongeur (18a, b) avant la sortie du réservoir et au moins un dispositif de coupe (24 a, b) après la sortie du réservoir,
- au moins un dispositif de transfert (28) pour le transfert successif des masses de verre délivrées du dispositif d'alimentation (12) avec des masses différentes dans plusieurs unités de mise en forme (32 a à 32c), lesquelles unités sont conçues pour différents produits en verre avec différentes masses ,
- au moins un dispositif de commande (22) pour la commande du plongeurs (18 a,b) et du dispositif de coupe (24 a, b) du dispositif d'alimentation (12), du dispositif de transfert (28) et des unités de mise en forme (32 a à 32c), laquelle unité de commande (22) coordonne l'activité des unités de mise en forme (32a à 32c), le dispositif d'alimentation (12) et le dispositif de transfert (28) en concordance avec les temps de traitement spécifiques aux masses de verre des produits dans les unités de mise en forme (32 a à 32 c), respectivement leurs cadences,
- le dispositif de commande (22) étant réalisé pour décaler de toute manière une des unités de mise en forme (32 a à 32c) vers une fenêtre temporelle qui est assez grande pour effectuer l'alimentation de l'unité respectivement des unités de mise en forme qui n'ont pas encore été alimentées, dans le cas où ledit dispositif de commande détermine la superposition temporelle des instants d'alimentation d'au moins deux unités de mise en forme (32 a à 32c) ou une distance temporelle des instants d'alimentation d'au moins deux ou plusieurs unités de mise en forme (32 a à 32c), laquelle distance est inférieure au temps nécessaire pour le processus d'alimentation.

6. Procédé de fabrication selon la revendication 5, dans lequel le produit d'une unité de mise en forme alimentée de façon décalée est séparé et / ou éliminé.

7. Procédé de fabrication selon la revendication 5 ou 6 , dans lequel le premier instant d'alimentation pour le début de service d'une unité de mise en forme est choisi en fonction des instants d'alimentation des autres unités de mise en forme (32 a à 32c), l'instant d'alimentation étant choisi de manière à ce que la fréquence de superposition avec les instants d'alimentation des autres unités de mise en forme (32a à 32c) soit peu élevée respectivement minimisée.

8. Procédé de fabrication selon la revendication 5, 6 ou 7, dans lequel on décale l'instant d'alimentation de l'unité de mise en forme qui présente la plus faible fréquence de superposition avec les instants d'alimentation des autres unités de mise en forme (32a à 32c) sur la base de la fenêtre temporelle en aval en tant qu'instant de démarrage pour le cycle d'alimentation individuel.

9. Procédé de fabrication selon la revendication 8, dans lequel on choisit et on utilise en tant que fenêtre temporelle en aval, le laps de temps libre qui suit directement et dans lequel on utilise une autre fenêtre temporelle qui suit cette fenêtre temporelle choisie, si aucune solution avec une fréquence de superposition suffisamment faible n'a été trouvée pour la première fenêtre temporelle.

10. Procédé de fabrication selon une des revendications 7, 8 ou 9, qui pour apprécier la fréquence de superpositions analyse les instants d'alimentation de toutes les unités de mise en forme (32a à 32c) dans un laps de temps, par exemple compris entre 5 minutes et 2 heures.

11. Procédé de fabrication selon une des revendications 5 à 10, avec lequel on fabrique simultanément plusieurs masses de verre qui seront transférées dans une unité de mise en forme.
